# EUROPEAN PATENT APPLICATION

(11) **EP 4 645 096 A1**
(43) Date of publication of application: **05.11.2025**
(21) Application number: 24465520.5
(22) Date of filing: 30.04.2024
(51) Int. Cl.: G06F 11/36

(54) **METHOD FOR OPERATING A SYSTEM UNDER TEST**

(71) Applicant: Siemens S.R.L., 062204 Bucuresti (RO)
(72) Inventor: The designation of the inventor has not yet been filed
(74) Representative: Petcu, Costin

(57) **Abstract**

It is provided a method for operating a system under test, SUT (35). The method being performed using a supervisory system, SS (20), including a computer-implemented generation unit (21) adapted to generate test operation software, TOS, for the operation of the SUT (35). Said SS (20) further includes a measuring unit, MU (22), adapted to measure output values of at least one user-defined observation variable within a behavior and/or a configuration resulting from an operation of the SUT (35). The method further uses a testing system, TS (30), which is controllable by the SS (20). The TS (30) includes the SUT (35) and a simulator. Via an interaction of the SS (20) and the TS (30), the method generates new test operation software for the operation of the SUT (35).

Furthermore, a corresponding test and operation system, a corresponding computer program product and a corresponding computer-readable medium are provided.

## Description

The present invention relates to a method for operating a system under test being performed using a supervisory system and a testing system.

Nowadays, applications and systems like Application Specific Integrated Circuits, ASICS, become more and more complex as they have to be able to provide a larger variety of complex functionalities. Along with their growing complexity, also the testing of such applications and systems becomes more and more complex. In fact, a rigorous testing which covers a very large (if not complete) test space is often needed when such applications and systems are designed and manufactured.

Especially simulation-based applications and systems should be tested in a large test space of the simulated behavior and/or functionality. Expressed differently, a large test space should be explored when testing todays applications and systems, using simulations thereof. As the test-space (i.e. the number of tests) sometimes grows towards infinity, one of the most challenging activities is to define enough tests in the simulation space, to inspect the simulation results and to control and evaluate the efficiency of the simulated tests. Without an automatic, reactive mechanism that provides sufficient evidence for the quality and tests quantity, this activity is usually performed manually and has, therefore, a low productivity. Expressed once more in different terms, many of today's testing procedures for the testing of today's applications and systems involve writing test scenarios, programs, software and/or computer readable code manually by a human being which is cost-intensive, inefficient and often results in an insufficient testing of said applications and systems as the number of tests scenarios examined when testing is too small.

Even though testing is a critical activity, and it provides important information related to the quality of a system under test, there are still some limitations due to the fact that testing under all combinations of inputs is not achievable. The test space is bound to the quantity and quality of the defined test-cases and scenarios. Thus, a limited test space has a direct impact on the overall testing activity. In certain fields, which use simulation as a method of testing, the analysis and validation of test results is performed manually. Also, the qualitative and quantitative markers or values of observation parameters/variables are retrieved manually.

Other solutions make use of random test data generators, which can generate random bit streams and the bit streams are then converted into desired datatypes. These methods have the disadvantages of not creating quality test data and not being able to accomplish a high coverage level of the test space. Test scenarios generated from such solutions are rather undirected and arbitrary in their design.

Other alternative solutions are based on AI-powered test automation, which use artificial intelligence to generate test cases. These methods require the implementation of learning algorithms (using prior knowledge about the system and supervision in the learning process) and require large computational power.

Therefore, to overcome the problems mentioned hereinbefore, it is provided an improved method for operating a system under test which allows to automatically generate new test software which enables an improved testing of said system under test.

### Summary of the Invention

According to the invention, it is provided a method for operating a system under test, SUT. The method being performed using a supervisory system, SS, which includes a computer-implemented generation unit, GU, adapted to generate, based on test instructions, test operation software, TOS, for the operation of the SUT. Said supervisory system further includes a measuring unit, MU, adapted to measure output values of at least one user-defined observation variable within a behavior and/or a configuration resulting from an operation of the SUT. The method further uses a testing system, TS, which is controllable by the SS. The TS includes the SUT and a simulator. The TS is adapted to provide a simulation of the SUT operable with the TOS and to operate the SUT with said TOS. The provided method comprises the following steps: Generating, by the SS, a test operation software, TOS, from at least one test instruction provided to the SS, the test instruction comprising at least one user-defined input value for at least one user-defined input variable of the SUT, the TOS being configured to evoke a user-intended behavior and/or configuration of the SUT when it is operated therewith. Providing, to the SS, at least one expected output value for at least one user-defined observation variable expected to be observable as a part of the behavior and/or configuration of the SUT when the same is operated with the at least one TOS. Providing, by the TS, a simulation of the SUT and operating the simulation with the TOS provided by the SS. Measuring, by the SS, whether the operation results of said simulation show the at least one expected output value. Generating, by the SS, a new TOS, NTOS, by altering the TOS according to a pre-defined alteration scheme, if said operation results do not show said at least one expected output value. Storing, by the TS, the NTOS in a memory, and operating, by the TS, the SUT using the NTOS.

An advantage of such a method is that an enlarged test space for the testing of a system under test is automatically generated without involvement of human testers or testing staff in a cost-efficient manner. Hence, the inventive method represents an automatic, reactive testing and SUT operation mechanism that provides sufficient evidence for the quality and tests quantity.

Preferably, the system under test is a physical and/or technical system or a digital model of a physical and/or technical system. In a preferred embodiment, the system under test is an electrical, mechanical and/or pneumatical system and/or any combination thereof. In a preferred embodiment, the system under test is a digital model of a System on a chip, SoC, e.g. an industrial application specific integrated circuit, ASIC, an automotive ASIC, a medical ASIC, a digital signal processor, DSP, or DSP ASIC and/or a Networking ASIC. Furthermore preferred, the system under test is a Digital model of a car implementing AV/ADAS features as Adaptative cruise control, ACC, Lane keeping Assist, LKA, Automatic emergency braking, AEB, etc. Moreover preferred, the system under test is a system developed with a model-based system engineering approach, MBS approach, which may be simulated within a computer-based environment.

In a preferred embodiment, the computer-implemented generation unit comprises a computing unit, a computer and/or a processor, especially a digital signal processor and at least one memory in which instructions are stored which, when executed by the computing unit, computer and/or processor, cause the generation unit to generate, based on test instructions, test operation software, TOS, for the operation of the SUT.

Preferably, the at least one test instruction is a user-instruction and thus user-defined. Hence, the test or test instruction is preferably created and/or imported by a user. Preferably, the test instruction corresponds to or represents a written test program or at least one program instruction, i.e. one or more lines of computer-readable code which is interpretable by the generation unit.

In a preferred embodiment, the test operation software generatable by the generation unit is executable by the TS. Accordingly, the TS may interpret the instructions or the lines of computer-readable code comprised in the test operation software and translates them into distinct testing steps carried out by the TS, either on the SUT itself or on a simulation of the SUT. Furthermore preferred, the SS may interpret the instructions or the lines of computer-readable code comprised in the test operation software and translates them into distinct testing steps and controls the testing system to carry out said testing steps, either on the SUT itself or on a simulation of the SUT.

In a preferred embodiment, the measuring unit is also adapted to measure output values of at least one user-defined observation variable within the behavior and/or configuration resulting from an operation of the simulation of the SUT.

Preferably, the measuring unit is entirely computer-implemented. However, in other embodiments, the measuring unit is not entirely or not at all computer-implemented, but comprises at least one sensor adapted to measure output values of at least one user-defined observation variable within a behavior and/or configuration resulting from an operation of the system under test or resulting from an operation of a simulation of a system under test. Furthermore preferred, the measuring unit is adapted to measure the at least one output value using the testing system. Expressed differently, the measuring unit is preferably adapted to measure the output value via the testing system which comprises a test bed and/or test environment for the SUT which allows to measure the output values of the SUT. Furthermore preferred, the measuring unit is adapted to measure the output values from the simulation of the SUT, using the TS. In an especially preferred embodiment, measuring by the measuring unit merely means receiving, by the measurement unit, the measurement data corresponding to a measurement of the output values from the testing system.

Preferably, the simulation of the SUT providable with the simulator of the TS shows the same or a similar behavior and/or configuration as the SUT itself when the simulation of the SUT is operated with the same test operation software as the SUT. Expressed again differently, when the SUT and the simulation thereof are operated with a TOS, the output results, i.e. the behavior and/or configuration are the same or at least similar. Hence, the measuring unit is adapted to measure output values within the behavior and configuration of the SUT and within the behavior and configuration of the simulation of said SUT, when SUT and simulation thereof are operated with one and the same TOS.

Preferably, the simulator is a computer-implemented simulator. Furthermore preferred, the simulation providable with the simulator is a computer-implemented simulation.

In a preferred embodiment, the at least one user-defined observation variable within a behavior and/or a configuration resulting from an operation of the SUT (or being evoked from said operation) corresponds to a specific and confined physical, chemical, mechanical or in general technical variable shown within the operation results of the system under test which may have different expressions, depending on the input values or parameters of the test operation software used to operate the system of a test. For example, if the system under test is a specific ASIC or electronic circuit, comprising three input terminals and three output terminals, the output voltage measurable on one specific output terminal (e.g. on the second one) of the SUT during or after the operation with a specific TOS may be an observation variable. Likewise, also the temperature in a geometrical center of a specific surface of the SUT may be selected as an observation variable in the sense of the invention. However, any other variable aspect of the SUT output results may be selected as an observation variable, being e.g. measured in units of time, length, mass, electric current, thermodynamic temperature, amount of substance and/or luminous intensity.

In a furthermore preferred embodiment, the at least one user-defined input variable corresponds to a specific and confined physical, chemical, mechanical or in general technical variable for which a specific value may be imported or provided for the operation of the system under test, wherein said variable may have different expressions. Referring back to the example mentioned above, the at least one user-defined input variable may be an input voltage applied to the third input terminal of the ASIC or electronic circuit mentioned above. Likewise, also the initial temperature in a geometrical center of a specific surface of the SUT, e.g. before the same is operated with the TOS, may be selected as an input variable in the sense of the invention. However, any other variable aspect of the SUT may be selected as an input variable, being e.g. measured in units of time, length, mass, electric current, thermodynamic temperature, amount of substance and/or luminous intensity.

Preferably, more than one input value for more than one input variable are defined by a user. Furthermore preferred, more than one expected output value for more than one observation variable are defined by a user.

According to a preferred embodiment, the step of altering the TOS according to the pre-defined alteration scheme comprises at least one of the following two steps: Altering the at least one user-defined input value according to a predefined first alteration function, AF, and augmenting the TOS with at least one software component which is pre-defined or generated in a pre-defined manner. With such an embodiment, the direction of the test space enlargement can advantageously be controlled according to the desire of the user who may define with which function or which software component specifically the at least one user-defined input value is altered how.

Preferably, the first AF is adapted to alter the at least one user-defined input value by using a predefined constrained randomization function and/or a predefined fixed values function being applied onto the at least one user-defined input value. In such an embodiment, the test space enlargement can advantageously either be controlled to develop into a predefined direction, e.g. by increasing the at least one user-defined input value by a fixed amount, or be randomly enlarged. Constrained-random numbers resulting from an application of the predefined constrained randomization function onto the input value/s may be especially suitable for test operation software or test scenarios where a similar behavior of the system under test is expected. Then, a test operation software or scenario having a large coverage may be simulated by using constrained-random numbers. Modifying the input values in a fixed manner by applying a fixed values function onto the input value/s may provide simulation results and coverage in equal intervals or at predefined critical areas. Such critical areas may be, for example, turning points of an axis of, for example, a robot arm.

In a furthermore preferred embedment, the at least one software component is pre-defined by a user or generated in a pre-defined constrained random manner. With such an embodiment, even more complex test programs or test operation software can automatically and cost-efficiently be developed.

Preferably, the steps of providing and operating of the simulation of the SUT, of measuring whether the at least one expected output value is shown, of generating a new TOS and of storing the NTOS are repeated with the NTOS as the TOS, respectively, until the operation results show said at least one expected output value. With such an embodiment, the test space is significantly increased as in every iteration of the method, a new test operation software with new and altered test parameters is generated which enlarges the test space useable for the operation of the SUT. If more than one expected output value for more than one user-defined observation variable expected to be observable as a part of the behavior and/or configuration of the SUT is defined, the test space will be increased further to a significant amount as the new test operations software is generated until all expected output values are shown. Such expected output values may for example correspond to specific output voltages, specific temperatures of the SUT and/or specific currents at an output terminal of the SUT etc.

In a preferred embodiment, the method further comprises the steps of storing the NTOS as a Target test operation software, TTOS, when said operation results show said at least one expected output value, and ending the method. With such an embodiment, every newly generated test operation software including the test operation software which finally achieves the desired results is advantageously stored in a memory and can be used for future testing and operation of comparable systems under test. Furthermore, a proper ending condition is advantageously defined for the inventive method.

Preferably, at least two repetitions of the steps of providing and operating of the simulation of the SUT, of measuring whether the at least one expected output value is shown, of generating a new TOS and of storing the NTOS are performed, respectively. In such a preferred embodiment of the invention, the SS is preferably further adapted to correlate the input values for the at least one user-defined input variable used during the repetitions with the output values for the at least one user-defined observation variable observable during the repetitions, respectively, and to provide a corresponding correlation function. In such an embodiment, SS and TS are adapted to interact with one another while the repetitions are performed and the inventive method is carried out. If, in such an embodiment, it is notified by the SS, via the correlation function, that the output values for the user-defined observation variable do not change as desired by a user (i.e. towards the expected output values), at least one of the input values may be additionally altered while and/or after the repetitions are performed in order to adjust the output values accordingly. Such an additional alteration preferably comprises modifying, depending on the correlation function, at least one of the input values of a test operation software and/or augmenting the test operation software, depending on the correlation function, with a pre-defined software component. With such an embodiment, the test space can be enlarged by an interaction between SS and TS, developing the test space into a specific, desired direction and in a controlled manner.

Furthermore preferred, the method comprises the step of altering, when the provided correlation function fulfills a pre-defined condition, at least one user-defined input value for the at least one user-defined input variable of the SUT when generating a NTOS. In such an embodiment, a specific test operation software evoking a specific and desired behavior and/or configuration and/or condition of the system und test can more quickly and/or more efficiently be generated.

In a preferred embodiment, the method further comprises the step of augmenting, when the provided correlation function fulfills a pre-defined condition, a TOS with at least one software component which is pre-defined or generated in a pre-defined manner when generating a NTOS. In such an embodiment, a specific test operation software evoking a specific and desired behavior and/or configuration and/or condition of the system und test can more quickly and/or more efficiently be generated.

It is further provided a test and operation system for the operation of a system under test, SUT. The test and operation system comprises a supervisory system, SS, including a computer-implemented generation unit, GU, adapted to generate test operation software, TOS, for the operation of the SUT from at least one test instruction comprising at least one user-defined input value for at least one user-defined input variable of the SUT. The TOS is configured to evoke a user-intended behavior and/or configuration of the SUT when it is operated therewith. Furthermore, the supervisory system comprises a measuring unit, MU, adapted to measure output values of at least one user-defined observation variable within a behavior and/or a configuration resulting from an operation of the SUT. Moreover, the supervisory system comprises an input unit, IU, adapted to receive at least one test instruction comprising at least one user-defined input value for at least one user-defined input variable of the SUT and at least one expected output value for at least one user-defined observation variable expected to be observable as a part of the behavior and/or configuration of the SUT when the same is operated with the at least one TOS. The input unit is further adapted to provide the at least one received test instruction and the at least one received expected output value to the GU. Furthermore, the test and operation system comprises a testing system, TS, controllable by the SS, including the SUT and a Simulator, the TS being adapted to provide a simulation of the SUT operable with the TOS and to operate the SUT with said TOS, and means adapted to execute the steps of the provided method as defined above, using the SS and the TS. With such a test and operation system, the advantages mentioned hereinbefore for the proposed method may advantageously be realized also for the test and operation system.

Furthermore, it is provided a computer program product comprising instructions to cause the provided test and operation system defined hereinbefore to execute the steps of the provided method as described above, using the SS and the TS. With such a computer program product, the advantages mentioned hereinbefore for the proposed method may advantageously be realized also for said computer program product.

Moreover, a computer-readable medium is provided, having stored thereon the provided computer program defined above. With such a computer-readable medium, the advantages mentioned hereinbefore for the proposed method may advantageously be realized also for said computer-readable medium.

Preferably, the computer-implemented generation unit allows for a coverage driven generation e.g. of constrained-random tests. Preferably, a test operation software, TOS, corresponds to a specific test scenario with which the system under test shall be tested. By the generation of the new TOS, NTOS, which considers the at least one test instruction as a base test scenario, a high coverage and non-overlapping test operation software and thus test scenario is generated. Accordingly, the efficiency of the simulation of the system under test is enhanced.

According to a preferred embodiment, the supervisory system automatically creates variations of a test operation software, representing a specific test scenario, by processing an internal representation, that is the unit structures, of a target test configuration of a system under test either by generating independent test operation software, i.e. test scenarios or by dynamically interacting during the simulation of the system under test, e.g. via abovementioned correlation function. Preferably, the TOS generation is dynamically tuned based on the test simulation results. Thereby, a reactive behavior to simulation results is achieved. By this method, an enlargement of the tests space coverage is achieved by the usage of a simulation of the SUT.

By repeating abovementioned repetition steps, in every repetition, a new test operation software and thus a new scenario is created or generated. Said generation is bound by user-defined configurations and constraints as provided with the initial at least one test instruction and corresponding test operation software, TOS, generated therefrom. Preferably, the at least one test instruction is entirely user-defined. Furthermore preferred, the at least one test instruction corresponds to an initial test operation software which at least comprises a set of user-defined instructions which together correspond to an operation scheme or algorithm for the system under test, causing a specific behavior and/or configuration and/or condition of the SUT when the same is operated with the initial test operation software. Said initial test operation software may also be denoted as a base test scenario and/or the information regarding the intended behavior. Within those boundaries, by using the power of randomization together with user-defined configuration and constraints the number of test scenario variants, i.e. different test operation software that can be created or generated may be very large and expanded continuously. This leads to an extensive test space examination/exploration.

Preferably, the method further comprises the step of filtering-out or deleting redundant and irrelevant test operation software generated, i.e. filtering-out or deleting redundant and irrelevant test cases or scenarios. Preferably, test operation software comprising input values which lead to output values as part of the operation results of the simulation of the SUT which deviate from the expected output values to a pre-defined amount are filtered-out or deleted.

In a preferred embodiment, the generated variants of the test operation software, i.e. test scenarios is subject to a qualitative and quantitative analysis. Furthermore preferred, the number of generated test operation software i.e. test scenarios is automatically increased until it reaches a desired, pre-defined level of completeness, that is coverage of the simulation results. Preferably, the number of tests is automatically increased until a pre-defined number and thus a desired level of completeness is reached.

Preferably, the method is carried out multiple times using different test operation software from different domains during different repetitions of the method. The coverage, that is the different generated test operation software, i.e. test scenarios, from different domains may be collected and aggregated. In this context, a different domain preferably corresponds to a different field of application of the same system under test, wherein different applications preferably refer to medical, industrial or consumer applications, where for the same system under test different parameters may be applied. The generation of very large test spaces may be aided by efficient usage of coverage information.

Preferably, the input values of the at least one initial test instruction, of the base test scenario, are augmented with user-defined or random-generated software components by the supervisory system.

Preferably, random-generated software components are components that introduce a random additional coverage check in an area, where no simulation results are available yet and/or where no unusual behavior is expected. Thereby, coverage and reliability of the simulation results is improved.

According to a preferred embodiment, the output values being part of the simulation results, i.e. of the operation results of the simulation, correspond to qualitative and/or quantitative markers.

Preferably, said markers are, as non-limiting examples, output values indicative for the output quality, process speed, process costs, energy consumption and/or reliability of the system under test. Furthermore preferred, the markers are numbers indicative of quality of one or more of the above attributes.

Preferably, all information transferred between the supervisory system and the system under test is monitored and measured for obtaining qualitative and/or quantitative markers.

In a preferred embodiment, the output values, especially the qualitative and/or quantitative markers are stored within the measuring unit and/or within the supervisory system for managing all simulation result data, i.e. the operation results of the simulation, in one location. Thereby, the output values or measurement results of multiple test operation software, i.e. test scenarios, may be analyzed as a whole, based on which analysis result the next test operation software or test scenario may be created or parameters within an existing test operation software or test scenario, which is currently simulated, may be changed.

According to a furthermore preferred embodiment, the generation unit is adapted to identify most relevant input variables and/or observation variables, i.e. parameters or input parameters of a test operations software or test scenario and to apply at least one of the abovementioned functions of the values thereof.

Preferably, said most relevant input variables and/or observation variables/parameters of a test operation software or test scenario represent variables/parameters which are known or pre-defined to be more relevant than others for a particular system under test.

### Brief description of figures

- Fig. 1: illustrates a first embodiment of a test and operation system according to the invention which is used for performing a first embodiment of a method that is according to the invention.
- Fig. 2: illustrates a flow chart graph for a method according to the present invention.

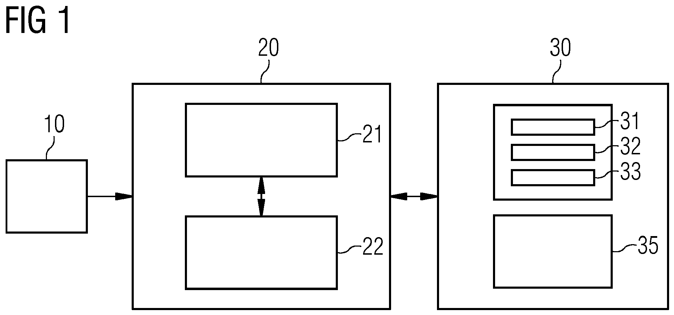

Fig. 1 shows a first embodiment of a test and operation system according to the invention which is used for performing a first embodiment of a method for operating a system under test, SUT 35, according to the invention.

The inventive method makes use of a supervisory system, SS 20 and a testing system, TS 30. In this first embodiment, the supervisory system 20 is communicatively connected with the testing system 30 (cf. arrow between supervisory system 20 and testing system 30). The supervisory system, SS 20, includes a computer-implemented generation unit, GU 21, adapted to generate, based on test instructions 10, test operation software, TOS, for the operation of the SUT 35. Furthermore, the SS comprises a measuring unit, MU 22, adapted to measure output values of at least one user-defined observation variable within a behavior and/or a configuration resulting from an operation of the SUT 35. The TS 30 may be controlled via the SS 20. The TS 30 includes the SUT 35 and a simulator, wherein the TS is adapted to provide a simulation of the SUT 35 operable with the TOS and to operate the SUT 35 with said TOS. In this exemplary first embodiment, the SUT 35 corresponds to an ASIC for a coffee machine (not shown), the ASIC exemplarily having a first, a second and a third input terminal and a first, a second and a third output terminal. Furthermore, the ASIC has an internal logic which process input values to specific output values according to said internal logic. Hereinafter, said ASIC will also be denoted as the ASIC under test. However, any other SUT 35 may be provided and the SUT 35 is not limited to ASICs. Especially, the SUT 35 itself may also merely correspond to a simulation of a technical, a mechanical, a physical or a chemical system. Hence, depending on the application, the system under test may e.g. be a digital model of a physical system (for example a digital twin) and/or a software system (for example a software application, which may have any size and/or complexity) or combinations of these two. In general, the system under test 35 may be a system for which a simulation-based testing process may be executed to observe the system under test behavior (and/or performance, and/or other results to be observed using the simulation) as a response to different test instructions and/or test operation software used to operate the SUT 35.

In this first embodiment, the GU 21 is exemplarily realized as a computer-implemented system comprising a processor and a memory. The memory stores instructions which, when executed, cause the GU 21 to generate, based on test instructions 10, test operation software, TOS, for the operation of the SUT 35. Expressed differently, the test operation software generated based on test instructions 10 substantially allows to apply said test instructions 10 onto an SUT 35 by virtue of an execution of the generated test operation software via the TS 30.

Said test instructions 10 may be written, generated and/or created by a user and imported to the SS 20. Said test instructions 10 may also be denoted as a base test scenario and/or configuration. The test instructions 10 may comprise input values causing the SUT 35 to behave according to at least one mandatory test scenario for multiple systems under test 35 or according to at least one mandatory test scenario for a category of systems under test 35. However, in this first embodiment, the test instruction 10 exemplarily comprises three user-defined input values for three user-defined input variables, which in this first embodiment exemplarily correspond to the input voltages to be applied to the three input terminals of the ASIC under test mentioned above. The test instruction 10 is designed or constructed such that when the same is converted to a corresponding test operation software, TOS, by the GU 21, said TOS is configured to evoke a user-intended behavior and/or configuration of the SUT 35 when it is operated therewith. This user-intended behavior may be given or defined by a user and may specify a certain mandatory behavior of the system under test 35.

The testing system 30 comprises the system under test 35 which may be embedded in a testbed or testing/surrounding environment. Besides the SUT 35, the TS 30 comprises a simulator which is capable of executing the test operation software, i.e. test scenarios received from the supervisory system 20. In this first embodiment, the simulator is computer-implemented and makes use of a dedicated software tool running on a computer device and of a corresponding platform, which in this example is realized as a PC. However, such a simulator may also run on a parallel computer platform, in the cloud, or on an embedded computer device, and the like. Also other implementations of simulators are possible, which may also comprise hardware components and not necessarily need to be entirely computer-implemented. In this first embodiment, the simulator is adapted to provide a computer-implemented simulation of the SUT 35 (here: of the ASIC under test for the coffee machine) which may react like the real ASIC under test when operated with a TOS received from the SS 20.

In this exemplary first embodiment, the input and output terminals of the ASIC are connected to a testing environment of the TS 30, such that the TS 30, based on and according to the TOS, which was generated based on abovementioned test instructions 10, received from the SS 20, may apply the three input values (the three input voltages) imported via the test instruction 10, to the corresponding input terminals of the ASIC under test and may measure the output values (the three output voltages) at the output terminals of the ASIC under test as a response of the ASIC under test to the execution of the TOS by the TS 30.

In this exemplary first embodiment, the measuring unit, MU, 22 is, as a part of the SS 20, computer-implemented as well. In this first embodiment, the generation unit 21 and the measuring unit 22 are communicatively coupled (cf. arrow between generation unit 21 and measuring unit 22). The MU 22 is adapted to measure the output values of at least one user-defined observation variable within a behavior and/or a configuration resulting from an operation of the SUT 35 and resulting from an operation of the simulation of the SUT 35, using a test operation software. In this exemplary first embodiment, the MU 22 is adapted to observe the flow of information between the SS 20 and the TS 30 and to retrieve the measurement data therefrom. Expressed differently, in this first embodiment, the MU 22 uses (and/or communicates with) the TS 30 to measure the output values of the SUT 35 and/or the output values of the simulation of said SUT 35, via the TS 30. Hence, the TS 30 provides a test environment to which the SUT 35 is connected which may be used by the MU 22 to retrieve the output values of the user defined observation variable. In this first embodiment, three observation variables are exemplarily defined, namely the output voltages measurable at the output terminals of the ASIC under test.

In this exemplary first embodiment, the method comprises the following steps.

In a first step, a test operation software, TOS, is generated from the test instruction 10 comprising the three user-defined input values for the three user-defined input variables, which in this first embodiment exemplarily correspond to the input voltages to be applied to three input terminals of the ASIC under test mentioned above. Hence, the user, in this first embodiment, exemplarily defines three specific voltage values to be applied to the three input terminals of the ASIC under test. For example, the user exemplarily defines that 3V shall be applied to the first input terminal, 2.5V shall be applied to the second input terminal and 4V shall be applied to the third input terminal of the ASIC under test, all at the same time. The GU 21, from this instruction, will generate a corresponding TOS which will - when executed - cause the TS 30 to apply the defined voltage values to the defined input terminals of the ASIC under test. The TOS, when operated, may thus cause the SUT 35 to be submitted to a specific test scenario realized via the TS 30. Hence, hereinafter, the terms "test operation software" and "test scenarios" may be interchangeable with one another throughout the underlying disclosure.

When inputting the test instruction 10, the user has a specific SUT 35 behavior and/or SUT 35 configuration in mind which he or she wishes/intends to evoke when operating the SUT 35 with said TOS. Hence, the test instruction 10 is provided to the GU 21 with the intention to evoke a specific behavior and/or configuration of the SUT 35. Said SUT behavior, in this exemplary first embodiment, may correspond to specific output voltage values measurable at specific output terminals of the ASIC under test. It is noted that in this exemplary first embodiment, the mentioned voltage values are all applied at the same time. However, a TOS according to the invention may also cause that these voltage values are e.g. all applied to the corresponding input terminals at a different point in time, referring to a specific reference time point.

In a second step of the method of this first embodiment, at least one expected output value for at least one user-defined observation variable expected to be observable as a part of the behavior and/or configuration of the SUT 35, when the same is operated with the at least one TOS, is provided to the SS 20. In this example, the user defines three specific output voltage values and defines where, that is, at which output terminals of the ASIC under test he or she expects them to be observable at which point in time. In this first embodiment, this expectation should be based on the understanding of the internal logic of the ASIC under test. In this example, the user defines - according to his or her expectation - to measure 1.2V at the first output terminal, 2.2V at the second output terminal and 4.5V at the third output terminal of the ASIC under test, with a delay of 2ms from output terminal to output terminal.

Then, in a third step of the method, a simulation of the SUT 35 is provided by the TS 30, which is operated with the TOS generated and provided by the SS. Thus, a simulation of the ASIC under test is provided which mimics the behavior and configuration of the real ASIC under test, said simulation being operable like the real ASIC under test. Expressed differently, the simulation of the ASIC under test may also be operated with the TOS, applying the three input voltage values to virtual input terminals of the simulation and measuring corresponding output values at the virtual output terminals of the ASIC under test.

Then, in a fourth step of the method of this first embodiment, it is measured, by the SS 20, whether the operation results of said simulation show the at least one expected output value. Here, it is measured, within the reaction, i.e. the shown behavior and resulting configuration of the simulation of the ASIC under test, whether the abovementioned expected output voltages (1.2V; 2.2V; 4.5V) are indeed present at the virtual output terminals of the simulation to the expected points in time.

In a fifth step of the method, the SS 20 generates a new TOS, NTOS 31, by altering the TOS according to a pre-defined alteration scheme, if said operation results do not show said at least one output value. In this example, the measured output voltages delivered as an operation result of the simulation operated with the TOS deviate from the expected output voltages 1.2V; 2.2V; 4.5V. Here, the first output voltage of the simulation is not 1.2V, but 0.7V, the second output voltage is not 2.2V, but 1.6V and the third output is not 4.5V, but 4V. In this case, the SS generates an NTOS 31 by altering the TOS according to a pre-defined alteration scheme, which in this first embodiment exemplarily corresponds to applying a fixed values function onto the input values of the test instruction 10 used for the TOS and generating a new TOS, NTOS 31, therefrom. Here, 0.1V are added to each input value respectively such that the NTOS is generated with the following input values: 3.1V, 2.6V, 4.1V.

In a sixth step of the method, this NTOS 31 is stored in a memory of the TS 30 and in a seventh step, the SUT 35, here the ASIC under test, is operated with this NTOS 31. As a result of this method, a further, new test operation software 31 is automatically generated, thereby enlarging and exploring the test space of the SUT 35 into a specific direction.

In this exemplary first embodiment, the method comprises the optional step of repeating, with the NTOS as the TOS, the steps of providing and operating of the simulation of the SUT 35, of measuring whether the at least one expected output value is shown, of generating a new TOS and of storing the NTOS, respectively, until the operation results show said at least one expected output value. With this optional step, further and different test operation software variants 32, 33 are advantageously generated and stored within the memory of the TS 30.

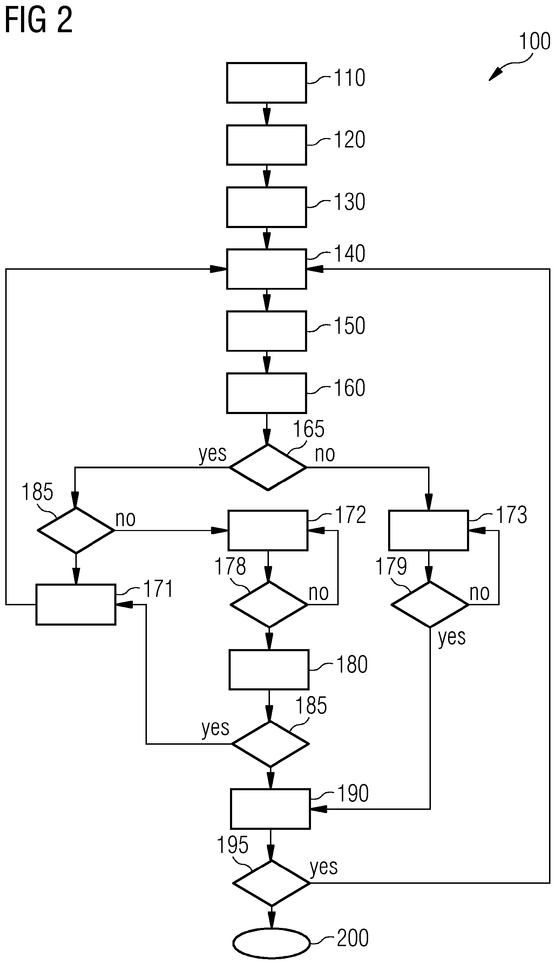

Fig. 2 illustrates a flow chart graph of a second embodiment of a method for operating a SUT 35 which is according the present invention.

The above descriptions regarding Fig. 1 apply accordingly, i.e. components and/or functions described hereinafter bearing the same reference signs as assigned to the components and/or functions in the description for FIG. 1, are identical to these components and/or functions.

The method 100 in this second embodiment exemplarily comprises the following steps:
Firstly, in step 110, input variables of the SUT 35 which are of interest to the user for a testing are defined.

Next, in step 120, a first test instruction 10 for the generation of a test operation software which causes the TS 30 to submit the SUT 35 to an intended base test scenario is provided to the SS 20. With said test instruction 10, sait defined input values for the input variables of the SUT 35 are provided to the GU 21. Steps 110 and 120 may also be realized as a combined step. Expressed differently, unit structures for the generation unit 21 are generated from a base test scenario and/or the information regarding the intended behavior in the supervisory system 20 in step 120.

Furthermore, in a step 130, expected output values for the user-defined observation variables expected to be observable as a part of the behavior and/or configuration of the SUT 35 when the same is operated with at least one TOS generated based on abovementioned test instruction 10 is provided to the SS 20. Especially, such output values may be imported by a user.

In a next step 140, a test operation software, TOS, is generated or created by the SS 20, based on the test instruction 10 provided. Alternatively, the TOS may also be directly provided in step 110. Furthermore, in other embodiments, steps 130 and 140 may be exchanged, such that the TOS is generated before the expected output values are defined. Thus, in step 140, a TOS is generated which causes the TS 30 to operate the SUT 35 according to a first test scenario created by the generation unit 21. The first test scenario may cover a wide variety of simulation steps, on which a subsequent test scenario may build upon. Alternatively, the first test scenario may already cover a first area of interest as provided by, for example, a user.

In a next step 150, a simulation of the system under test 35 is provided or launched, using, in this exemplary second embodiment, an electronic design automation (EDA) simulator which simulates a digital model of the SUT 35, here the ASIC under test described above.

In step 160, the provided simulation is operated with the TOS provided by the SS 20. In the next step 190, simulation results are extracted from the SUT 35 by the SS 20. Expressed in other words: In this step, it is measured, by the SS 20, whether the operation results, i.e. the behavior and/or configuration of the simulation of the SUT 35, show the expected output values defined before.

In the next step 195, the SS 20 generates a first new TOS, first NTOS 31, by altering the TOS according to a pre-defined alteration scheme, if said operation results do not show the expected output values. Hence, in this case, in which the output results do not show the expected output values, a first NTOS 31 is generated and at least the steps 140, 150, 160 and 190 are repeated with the NTOS 31 as the TOS to receive a second new test operation software, second NTOS 32 or second test scenario 32. Subsequently, the same steps may be repeated for a third new test operation software, third NTOS 33 or a third test operation scenario 33. Due to adopting the subsequent test scenario to the previous test scenario, the simulation efficiency is improved.

In an optional step 165 of this second exemplary embodiment, it is decided whether the simulation, by the TS 30, is run or operated in an interactive mode or not. When the simulation runs in the interactive mode, the following additional steps may follow after step 160. In step 180, a partial simulation result of the simulation of the system under test 35 is evaluated by the supervisory system 20, using e.g. the MU 22. Hence, it is evaluated whether at least some of the expected output values are shown in the operation results of the simulation.

In the next step 185, the supervisory system 20 determines whether additional parameters in the test operation software or test scenario are required. For this purpose, the SS 20, in this second embodiment, correlates the input values for the user-defined input variables used during the repetitions of the abovementioned method steps with the output values for the user-defined observation variables observable during the repetitions, respectively, provides a corresponding correlation function and checks whether the correlation function fulfills a pre-defined condition. Depending on the result of said check, it is determined whether additional parameters in the test operation software or test scenario are required.

If affirmative, in step 171, said additional parameters are requested from the SS 20 and the method returns to step 140. In more detail, when the provided correlation function fulfills said pre-defined condition, at least one of the user-defined input values for at least one of the user-defined input variables of the SUT 35 is altered, according to a further pre-defined scheme, for the generation of an NTOS or at least one pre-defined software component is provided to be added to a TOS during the generation of an NTOS.

Optionally, the steps including step 140 and following step 140, that is, generating another test operation software or test scenario by the generation unit 21 may be repeated until the expected output values are shown within the operation results of the simulation. This criterion may be dependent on a coverage of the simulation results of the TOS or test scenarios compared to the intended behavior. If in step 185, e.g. based on the correlation function, it is decided that no additional parameters in or for the test operation software or test scenario are required, the method continues with step 172, and operates the simulation with the TOS without additionally altering input values thereof and without augmenting the TOS with a pre-defined software component. In this exemplary second embodiment, the simulation is at least continued until it is determined, in an optional step 178, that partial results of said simulation are available, thus until at least some of the expected output values are shown in the operation results of the simulation. If this is the case, the method is continued with step 180.

If in optional step 165 of this second exemplary embodiment, it is decided or determined that the simulation, provided and operated by the TS 30, is not run or operated in an interactive mode, the method continues with step 173 in which the operation of the simulation is simply continued with the current TOS until it is decided or determined in step 179 that the operation of the simulation is finished. As long as the operation of the simulation is not finished, the operation is continued in step 173. When it is, in step 179, decided or determined that the operation of the simulation with a current TOS is finished, the method is continued with step 190.

Beyond the steps mentioned above, the method in this second embodiment also comprises the steps of storing (not shown), by the TS 30, the first, second and third NTOS 31, 32, 33 in a memory, and of operating (not shown), by the TS 30, the SUT 35 using the first, second and third NTOS 31, 32, 33 sequentially. When in step 195 it is determined or decided that the expected output values are all shown in the operation results of the simulation operated with the NTOS 33, the method is ended in step 200.

The invention has the advantage that, especially for large simulation spaces, for which only a small sub-simulation space is usually tested, due to lack of automatic means and the dimensions of the simulation space, the proposed method may dynamically create new TOS or new test scenarios to be executed in the testing system 30 by the system under test 35. The process of creating new or derived TOS or test scenarios may be dynamically measured, based on qualitative and quantitative markers, to reach an improved simulation space coverage.

The second embodiment may also be described using the following terms and expressions: The proposed method 100 comprises the following main steps: (step 110) importing the base test scenario; (step 120) creating the configuration which comprises the test intentions and/or intended observation points; (step 130) converting the configuration to structures used by generation unit; (step 140) generating test scenarios, test parameters/structures and/or random values associated to parameters and/or test scenarios; (step 150) measuring indicators of the generated structures in accordance with the configured test intentions and/or intended observation points; (step 160) the "testing system 30" proceeds with the actual simulation of the system under test 35 and, (step 165) depending on the configuration, the testing system 30 may interact with the supervisory system 20 in one of the following modes: (a) interactive mode ("yes" after step 165): i. requesting additional items during simulation (step 185); ii. simulating according to the received items (step 172); (b) detached mode ("no" after step 165): i. simulating generated test scenario (step 173). The generation unit 21 processes simulation results (step 178/179): (a) Partial result (step 180)(and request additional items if needed (step 185)); or (b) complete result ("yes" after step 179); (step 190) extracting qualitative and/or quantitative markers; (step 195) the generation unit computes the structures for the next generation step ("yes" after step 195) or stops the generation (step 200).

The test operation software or test scenarios 31, 32, 33 in some exemplary embodiments may comprise any combination of values, parameters and/or configurations which have a direct or indirect impact on the system under test 35. The test operation software or test scenarios 31, 32, 33 are thus used during simulation to drive the system under test in different states. The states may be functional or non-functional states. The test operation software or test scenarios 31, 32, 33 are further used to observe the system under test behavior in response to the conditions provided through the test scenarios. Alternatively, the test scenarios 31, 32, 33 may be combined with each other. Some test operation software or scenarios may be used to observe system under test features in the presence of another test scenario. Other uses may also apply.

The testing system may be implemented by using one of the following three approaches, or combinations thereof. Firstly, using the digital model of a physical system which mimics the intended behavior of the hardware, that is, simulation of the system under test 35, together with a testing framework that will ensure the interaction with the supervisory system 20. For example, a digital model of a system on chip (SoC) which may target at least one of an industrial application specific integrated circuit (ASIC), an automotive ASIC, a medical ASIC, a DSP (digital signal processing) ASIC, a networking ASIC or any other specialized ASIC. Additionally, an electronic design automation (EDA) simulator simulating a digital model of an ASIC or integrated circuit (IC) and the testing framework may be used. As another example, a digital model of a car implementing automated vehicle (AV) and/or advanced driver assistant system (ADAS) features like adaptative cruise control (ACC), lane keeping assist (LKA), automatic emergency braking (AEB) or similar systems. Additionally, an AV/ADAS simulator (simulating sensors/environment/vehicle dynamics) and the testing framework may be used. As a further general example, a system developed with a model-based system engineering (MBSE) approach may be simulated in a computer based environment.

Secondly, a combination of a testing framework (for interacting with the supervisory system) and specialized hardware, which emulates the system under test hardware, may be used. Those may be, for example, ASIC emulation hardware like, for example, field programmable gate arrays (FPGAs) or custom ASIC emulation systems. Alternatively, car components emulators like, for example, an ECU emulator, an actuator emulator, a sensor emulator and/or a communication bus emulator may be used.

Thirdly, the system under test 35 may be a physical device surrounded by a testing infrastructure (e.g. a hardware testbed) .

As a general remark, it should be clear that the features of the descriptions regarding the embodiments as mentioned above may be combined, even in ways not literally mentioned, to form further embodiments of the same invention.

### References List

- 10: test instructions
- 20: supervisory system
- 21: generation unit
- 22: measuring unit
- 30: testing system
- 31: first new test operation software, first NTOS
- 32: second new test operation software, second NTOS
- 33: third new test operation software, third NTOS
- 35: system under test

- 100: method for operating a system under test
- 120: providing at least one test instruction to the SS
- 130: providing at least one expected output value to the SS
- 140: generating a test operation software
- 150: providing a simulation of the SUT
- 160: operating the simulation with the TOS
- 190: measuring, whether the operation results of said simulation show the at least one expected output value
- 195: generating a new TOS, NTOS

## Claims

1. Method (100) for operating a system under test, SUT (35), the method (100) being performed using a
supervisory system, SS (20), including
a computer-implemented generation unit, GU (21), adapted to generate, based on test instructions (10), test operation software, TOS, for the operation of the SUT (35);
a measuring unit, MU (22), adapted to measure output values of at least one user-defined observation variable within a behavior and/or a configuration resulting from an operation of the SUT (35), and using
a testing system, TS (30), controllable by the SS, including the SUT (35) and a simulator, the TS being adapted to provide a simulation of the SUT (35) operable with the TOS and to operate the SUT (35) with said TOS; the method comprising the steps of:
**a)** generating (140), by the SS (20), a test operation software, TOS, from at least one test instruction (10) provided (120) to the SS (20), the test instruction (10) comprising at least one user-defined input value for at least one user-defined input variable of the SUT (35), the TOS being configured to evoke a user-intended behavior and/or configuration of the SUT (35) when it is operated therewith;
**b)** providing (130), to the SS (20), at least one expected output value for at least one user-defined observation variable expected to be observable as a part of the behavior and/or configuration of the SUT (35) when the same is operated with the at least one TOS;
**c)** providing (150), by the TS (30), a simulation of the SUT (35) and operating (160) the simulation with the TOS provided by the SS;
**d)** measuring (190), by the SS (20), whether the operation results of said simulation show the at least one expected output value;
**e)** generating (195), by the SS (20), a new TOS, NTOS (31), by altering the TOS according to a pre-defined alteration scheme, if said operation results do not show said at least one expected output value;
**f)** storing, by the TS (30), the NTOS (31) in a memory, and
**g)** operating, by the TS (30), the SUT (35) using the NTOS (31) .

2. The method (100) of claim 1, wherein altering the TOS according to the pre-defined alteration scheme comprises at least one of the following two steps:
**el)** altering the at least one user-defined input value according to a predefined first alteration function, AF, and
**e2)** augmenting the TOS with at least one software component which is pre-defined or generated in a pre-defined manner.

3. The method (100) of claim 2, wherein in step **e1)**, the first AF is adapted to alter the at least one user-defined input value by using a predefined constrained randomization function and/or a predefined fixed values function being applied onto the at least one user-defined input value.

4. The method (100) of claim 2 or 3, wherein in step **e2)**, the at least one software component is pre-defined by a user or generated in a pre-defined constrained random manner.

5. The method (100) of one of the previous claims, wherein the steps **c)** to **f)** are repeated with the NTOS as the TOS, respectively, until the operation results show said at least one expected output value.

6. The method (100) of claim 5, wherein the method further comprises the steps of
**h)** storing the NTOS as a target test operation software, TTOS, when said operation results show said at least one expected output value, and
**i)** ending the method (100).

7. The method (100) of claim 5 or 6, wherein at least two repetitions of steps **c)** to **f)** are performed, wherein the SS (20) is further adapted to correlate the input values for the at least one user-defined input variable used during the repetitions with the output values for the at least one user-defined observation variable observable during the repetitions, respectively, and to provide a corresponding correlation function.

8. The method (100) of claim 7, wherein the method further comprises the step of altering, when the provided correlation function fulfills a pre-defined condition, at least one user-defined input value for the at least one user-defined input variable of the SUT (35) when generating a NTOS.

9. The method (100) of claim 7 or 8, wherein the method further comprises the step of augmenting, when the provided correlation function fulfills a pre-defined condition, a TOS with at least one software component which is pre-defined or generated in a pre-defined manner when generating a NTOS.

10. A test and operation system for the operation of a system under test, SUT (35), the test and operation system comprising:
a supervisory system, SS (20), including
a computer-implemented generation unit, GU (21), adapted to generate test operation software, TOS, for the operation of the SUT (35) from at least one test instruction (10) comprising at least one user-defined input value for at least one user-defined input variable of the SUT (35), the TOS being configured to evoke a user-intended behavior and/or configuration of the SUT (35) when it is operated therewith;
a measuring unit, MU (22), adapted to measure output values of at least one user-defined observation variable within a behavior and/or a configuration resulting from an operation of the SUT (35);
an input unit, IU, adapted to
- receive at least one test instruction (10) comprising at least one user-defined input value for at least one user-defined input variable of the SUT (35) and at least one expected output value for at least one user-defined observation variable expected to be observable as a part of the behavior and/or configuration of the SUT (35) when the same is operated with the at least one TOS, and to
- provide the at least one received test instruction and the at least one received expected output value to the GU (21) ;
a testing system, TS (30), controllable by the SS, including the SUT (35) and a simulator, the TS (30) being adapted to provide a simulation of the SUT (35) operable with the TOS and to operate the SUT (35) with said TOS, and
means adapted to execute the steps of the method according to one of the claims 1 to 9, using the SS (20) and the TS (30).

11. A computer program product comprising instructions to cause the test and operation system of claim 10 to execute the steps of the method of one of the claims 1 to 9, using the SS (20) and the TS (30).

12. A computer-readable medium having stored thereon the computer program of claim 11.
